# EUROPÄISCHE PATENTSCHRIFT

(11) **EP 1 904 337 B1**
(45) Veröffentlichungstag und Bekanntmachung des Hinweises auf die Patenterteilung: **13.10.2010**
(21) Anmeldenummer: 06741636.2
(22) Anmeldetag: 12.06.2006
(51) Int. Cl.: B60N 2/44, A47C 27/10

(54) **PNEUMATISCH VERSTELLBARE SEITENWANGEN FÜR FAHRZEUGSITZE**
PNEUMATICALLY ADJUSTABLE SIDE EDGES FOR VEHICLE SEATS
PARTIES LATERALES DE SIEGES DE VEHICULES A REGLAGE PNEUMATIQUE

(30) Priorität: 20.07.2005 CH 12012005
(43) Veröffentlichungstag der Anmeldung: 02.04.2008
(73) Patentinhaber: Prospective Concepts AG, 8152 Glattbrugg (CH)
(72) Erfinder: HABEGGER, Daniel, CH-8104 Weiningen (CH); KEREKES, Laszlo, CH-8037 Zürich (CH); GUHMANN, Andreas, CH-8409 Winterthur (CH)
(74) Vertreter: Stump, Beat
(86) Internationale Anmeldenummer: PCT/CH2006/000311
(87) Internationale Veröffentlichungsnummer: WO 2007/009274

(56) Entgegenhaltungen:
- US-A- 4 589 695
- US-A- 4 885 827
- US-A- 4 965 899
- US-A- 5 280 997
- US-A- 6 037 731
- "LATERAL-ACCELERATION-COMPENSATING SEAT" AUTOMOTIVE ENGINEERING, SOCIETY OF AUTOMOTIVE ENGINEERS. WARRENDALE, US, Bd. 102, Nr. 5, 1. Mai 1994 (1994-05-01), Seite 27, XP000444866 ISSN: 0098-2571

## Beschreibung

Die vorliegende Erfindung betrifft pneumatisch verstellbare Seitenwangen, beispielsweise zur Verwendung in Fahrzeugsitzen, nach dem Oberbegriff des Patentanspruches 1. Pneumatisch verstellbare Seitenwangen für Fahrzeugsitze sind an sich bekannt. Sie bestehen in der Regel aus Luftkissen, welche in die Seitenwangen integriert sind. Den nächstliegenden Stand der Technik stellt die US 4 965 899 dar.

Dieses Dokument offenbart einen Sitz mit pneumatischen Komponenten. Unter anderem sind offenbart pneumatisch verstellbare Seitenwangen sowohl für die Sitzfläche als auch für die Lehne eines Fahrzeugsitzes. Welche jedoch aufwendig herzustellen sind Wünschenswert für die Anwendung in Seitenwangen ist eine möglichst gerichtete eindimensionale Bewegung des pneumatischen Aktors, die mit möglichst wenig Luft erzeugt werden kann.

Die Aufgabe der vorliegenden Erfindung ist entsprechend die Schaffung pneumatisch verstellbarer Seitenwangen für Fahrzeugsitze, bei denen mit wenig Druckluft möglichst grosse Stellwege bei Bedarf schnell erreicht werden. Zudem sollen die Seitenwangen kostengünstig und einfach hergestellt werden können.

Die Lösung der Aufgabe ist wiedergegeben im Patentanspruch 1 hinsichtlich der wesentlichen Merkmale, in den weiteren Patentansprüchen hinsichtlich weiterer vorteilhafter Merkmale. Anhand der beigefügten Zeichnungen wird die Erfindung näher erläutert.

Es zeigen
- Fig. 1: schematische Darstellung eines Fahrzeugsitzes mit pneumatisch verstellbaren Seitenwangen in isome- trischer Ansicht,
- Fig. 2: schematische Darstellung eines ersten Ausführungs- beispiels pneumatisch verstellbarer Seitenwangen in Obenansicht,
- Fig. 3: schematische Darstellung eines zweiten Ausfüh- rungsbeispiels pneumatisch verstellbarer Seiten- wangen in Obenansicht,
- Fig. 4: schematische Darstellung eines dritten Ausfüh- rungsbeispiels pneumatisch verstellbarer Seiten- wangen in Obenansicht,
- Fig. 5: schematische Darstellung eines ersten Ausführungs- beispiels eines Kissens für verstellbare Seiten- wangen in Draufsicht,
- Fig. 6: schematische Darstellung des ersten Ausführungs- beispiels eines Kissens für verstellbare Seiten- wangen als Isometrie,
- Fig. 7: schematische Darstellung des ersten Ausführungs- beispiels eines Kissens für verstellbare Seiten- wangen im Querschnitt,
- Fig. 8: schematische Darstellung eines zweiten Ausfüh- rungsbeispiels eines Kissens für verstellbare Sei- tenwangen als Isometrie,
- Fig. 9: schematische Darstellung des zweiten Ausführungs- beispiels eines Kissens für verstellbare Seiten- wangen als Isometrie,
- Fig. 10a,b: schematische Darstellungen des zweiten Ausfüh- rungsbeispiels eines Kissens für verstellbare Sei- tenwangen in Seitenansicht,
- Fig. 11: schematische Darstellung des zweiten Ausführungs- beispiels eines Kissens für verstellbare Seiten- wangen in einen Sitz eingebaut in Draufsicht,
- Fig. 12: schematische Darstellung eines dritten Ausfüh- rungsbeispiels eines Kissens für verstellbare Sei- tenwangen als Isometrie,
- Fig. 13: schematische Darstellung des dritten Ausführungs- beispiels eines Kissens für verstellbare Seiten- wangen im Querschnitt.

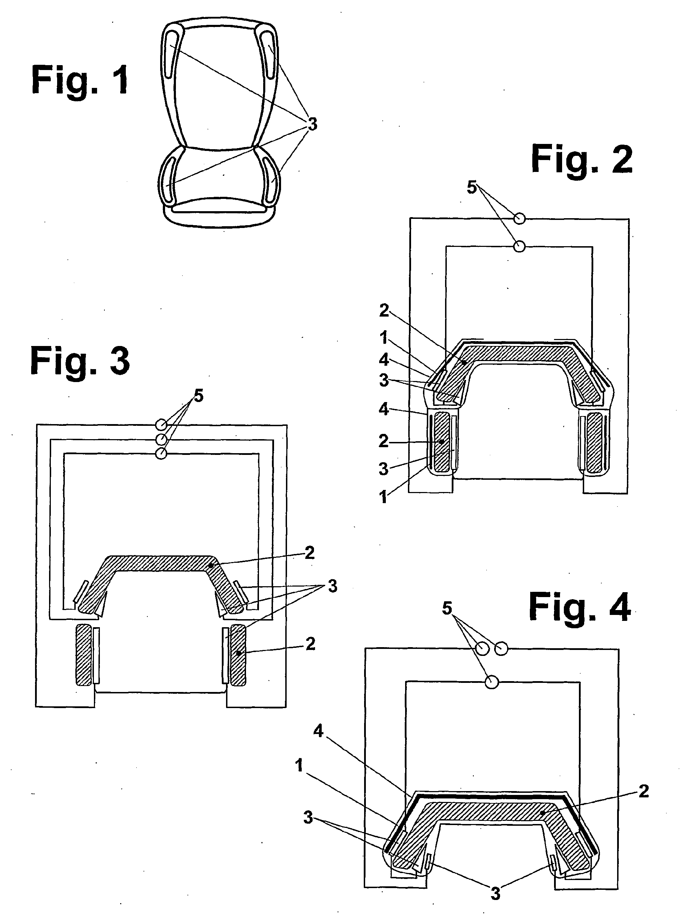

Fig. 1 zeigt eine schematische Darstellung eines Fahrzeugsitzes mit pneumatischen Kissen 3 in den Seitenwangen sowohl der Lehne als auch der Sitzfläche.

In den Fig. 2-4 ist schematisch der Aufbau und die Wirkungsweise erfindungsgemässer pneumatisch verstellbarer Seitenwangen dargestellt. Fig. 2 zeigt die Lehne eines Fahrzeugsitzes und die Seitenwangen der Sitzfläche in Obenansicht. Auf einem rigiden oder semirigiden Rahmen 1 ist ein weiches Formteil 2 befestigt. Mehrere pneumatische Kissen 3 befinden sich zwischen Rahmen 1 und Formteil 2 oder, dem Benutzer des Sitzes zugewandt, auf dem Formteil 2. Rahmen 1, Formteil 2 und Kissen 3 werden von einem Überzug 4 umhüllt.

Der Aufbau eines Fahrzeugsitzes ist bis auf die Positionierung, die Art und den Betrieb der Kissen 3 Stand der Technik und dem Fachmann bekannt.

Der Rahmen 1 des Sitzes kann beispielsweise aus einer festen Kunststoffschale oder aus einem Metallrahmen mit eingespanntem Metallgitter bestehen. Das Formteil 2 ist beispielsweise aus Kokosfasern oder Schaumstoff hergestellt. Der Überzug 4 besteht beispielsweise aus einem textilen Material und kann wiederum mit Schaumstoff gepolstert sein.

In Fig. 2 sind zwei Kissen 3 an jeder Seitenwange der Lehne angebracht und je ein Kissen 3 an der Seitenwange der Sitzfläche. Bei den Seitenwangen der Lehne dient ein Kissen 3 zwischen Formteil 2 und Rahmen 1 dazu, das Formteil 2 im Bereich der Seitenwangen gegen den Benutzer zu drücken. Auf dem Formteil 2 ist ein weiteres Kissen 3 angebracht, welches einzig durch den Überzug 4 vom Benutzer getrennt ist. Beide Kissen 3 werden über dieselbe Leitung mit Druck beaufschlagt. Es wird ein Ventil 5 zur Steuerung des Druckes in den Kissen 3 benötigt.

Auf den Seitenwangen der Sitzfläche sind ebenfalls Kissen 3 befestigt. In Fig. 2 befinden sich die Kissen 3 auf der dem Benutzer zugewandten Seite des Formteils 2. Es ist auch erfindungsgemäss, das Kissen 3 zwischen Formteil 2 und Rahmen 1 anzubringen oder - analog der bei der Lehne gezeigten Variante - mit Kissen 3 auf beiden Seiten des Formteils 2. Alle genannten Kombinationen mit einem Kissen 3 pro Seitenwange sind auch bei den Seitenwangen der Lehne möglich. Die Kissen 3 auf der Sitzfläche werden durch ein zweites Ventil 5 mit Druckluft beaufschlagt und können somit unabhängig von den Kissen 3 in der Lehne verstellt werden.

Fig. 3 zeigt ein zweites Ausführungsbeispiel pneumatisch verstellbarer Seitenwangen. Die Kissen 3 der Seitenwangen der Lehne werden über zwei Ventile angesteuert. Dies ermöglicht, dass die dem Benutzer zugewandten Kissen 3 mit einem anderen Druck beaufschlagt werden können als die zwischen Formteil 2 und Rahmen 1 positionierten Kissen 3.

Fig. 4 zeigt schematisch ein drittes Ausführungsbeispiel. Um die Seitenwangen dynamisch, das heisst innert Sekunden oder besser Sekundenbruchteilen, an die aktuelle seitliche Beschleunigungssituation anzupassen, ist das erste Ausführungsbeispiel zusätzlich mit dynamischen Kissen 3 ergänzt. Diese dynamischen Kissen 3 sind auf den statischen Kissen 3 auf der dem Benutzer zugewandten Seite der Seitenwange angebracht. Sie unterscheiden sich von den für statische Anpassungen verwendeten Kissen 3 insbesondere durch ein reduziertes Luftvolumen und durch die Möglichkeit, sie auf jeder Seite des Sitzes unabhängig voneinander mit Druck zu beaufschlagen. Die dynamischen Kissen 3 werden je Seite mittels separater Ventile 5 angesteuert.

Der Druckluftablass aus den Kissen 3 kann generell über dieselben Leitungen erfolgen wie die Druckluftzufuhr.

Um die Seitenwangen automatisch an die aktuelle seitliche Beschleunigungssituation anpassen zu können, sind Mittel für Steuerung und Regelung der dynamischen Kissen 3, sowie Mittel zur Messung der seitlichen Beschleunigung nötig. Die seitliche Beschleunigung kann beispielsweise direkt mittels eines oder mehrerer Beschleunigungssensoren gemessen werden oder indirekt aus Geschwindigkeit und Einschlagwinkel der Lenkung berechnet werden.

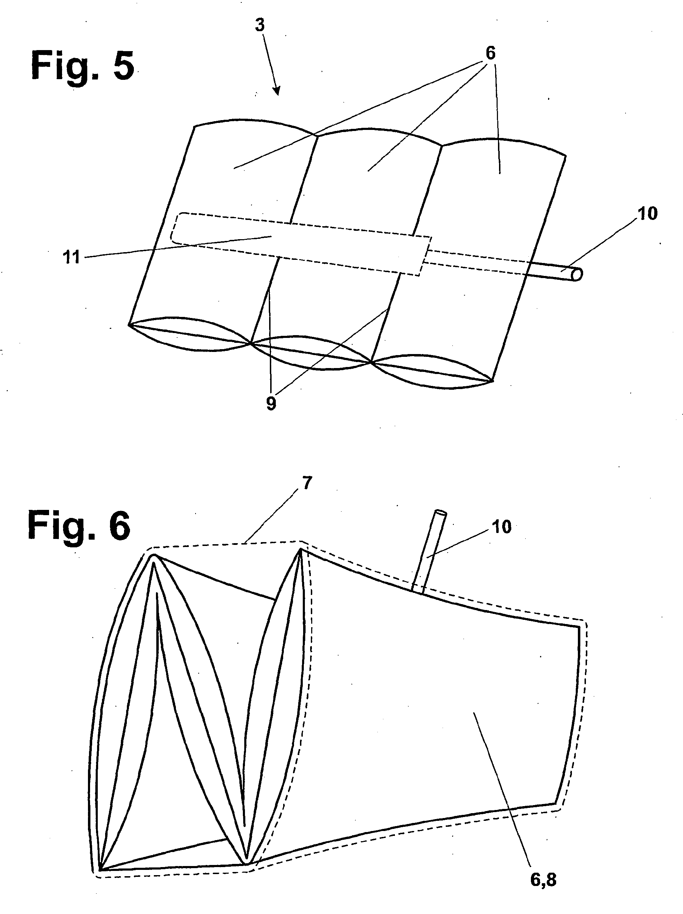

Die Fig. 5-7 zeigen ein erstes Ausführungsbeispiel eines pneumatischen Kissens 3 für pneumatisch verstellbare Seitenwangen. Um mit möglichst wenig Luft eine möglichst grosse und möglichst gerichtete Bewegung zu erzeugen wird ein Kissen 3 mit drei Kammern 6 z-förmig gefaltet. Eine schlauchförmige Hülle 7 hindert das Kissen 3 daran, bei Druckbeaufschlagung eine gestreckte Form einzunehmen.

Fig. 5 zeigt das Kissen 3 ohne Hülle 7. Das Kissen wird beispielsweise kostengünstig und einfach hergestellt, indem zwei aufeinandergelegte Membranen 8 mittels eines Stempels in einem Schweissvorgang verschweisst werden. Als Membran 8 wird beispielsweise eine 200-300 µm Dicke PU-Folie verwendet.

Das Kissen 3 ist in drei Kammern 6 unterteilt. Zwei Verbindungen 9 weisen je mindestens einen Unterbruch auf, durch welche die Luftzufuhr der nicht direkt über eine Leitung 10 mit Luft versorgten Kammern 6 ermöglicht wird. Um den Druckausgleich zwischen den Kammern 6 auch im gefalteten Zustand des Kissens 3 zu gewährleisten, sind im Bereich der Unterbrüche entsprechende Mittel 11 vorhanden. Im ersten Ausführungsbeispiel sind diese Mittel 11 ein Distanzgewirk 11, welches im Bereich der Unterbrüche quer ins Kissen 3 eingelegt ist. Dem Fachmann sind weitere Mittel 11 bekannt, die den Luftaustausch über Falten eines Kissens 3 ermöglichen. Es seien als weiteres Beispiel Hohlprofile oder Schlauchstücke erwähnt, welche im Knickbereich genügend starr sind und im Knick nicht vollständig zusammengedrückt werden. Die Mittel 11 können vor dem Verschweissen zwischen die Membranen 8 gelegt werden. Je nach Dicke der Membran 8 und Grösse und Anzahl der Unterbrüche in den Verbindungen 9 kann der Luftaustausch auch ohne Mittel 11 gewährleistet sein, und es kann auf die Mittel 11 verzichtet werden.

Es ist zudem erfindungsgemäss, die Verbindungen 9 durchgehend auszuführen, auf die Mittel 11 zu verzichten und stattdessen jede Kammer 6 mit einer separaten Luftleitung 10 auszustatten.

Die Fig. 6 zeigt das erste Ausführungsbeispiel eines Kissens 3 z-förmig gefaltet in der Hülle 7. Die Hülle 7 ist beispielsweise aus elastischem Material gefertigt, kann aber auch aus dehnungsarmem textilem Material hergestellt werden, welches die maximale Ausdehnung des Kissens begrenzt. Eine elastische Hülle 7 unterstützt das Entweichen der Luft aus dem Kissen 3, was bei dynamischer Anwendung des Kissens 3 kürzere Verstellzeiten ermöglicht, ohne dass sehr grosse Ablassventile benötigt werden, oder die Luft aktiv abgepumpt werden muss.

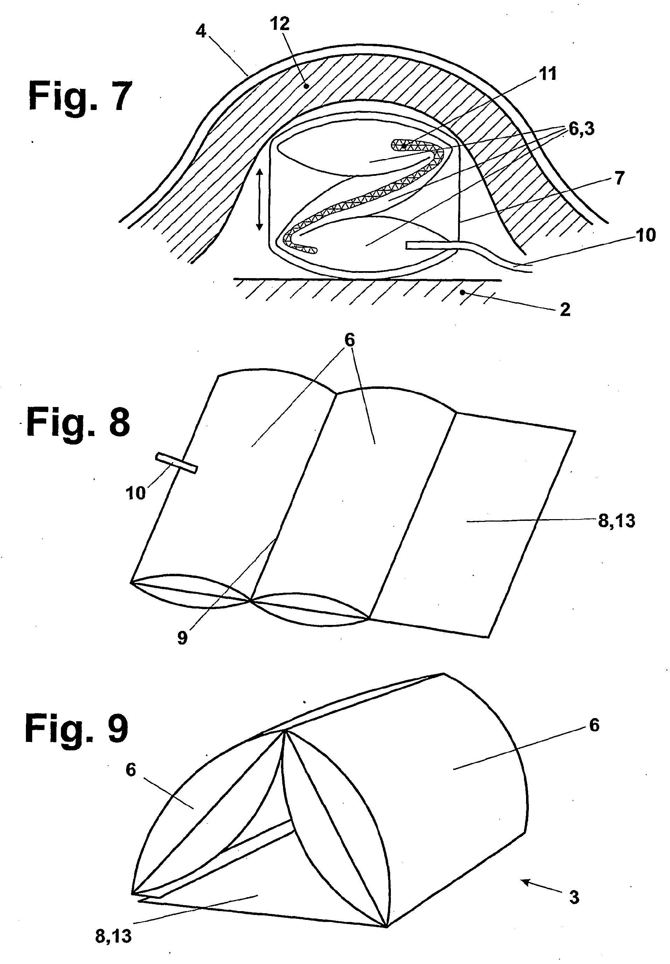

Fig. 7 zeigt das erste Ausführungsbeispiel eines Kissens 3 eingebaut in eine Seitenwange im Querschnitt. Die Pfeile deuten die Bewegung der Seitenwange bei Beaufschlagung mit Druck oder bei Druckentlastung an. Das Kissen 3 oder die Hülle 7 sind auf dem Formteil 2 befestigt und/oder teilweise in eine Aussparung im Formteil eingelassen. Unter dem Überzug 4 ist in diesem Ausführungsbeispiel noch eine zusätzliche Polsterung 12 vorhanden, welche den Komfort im Bereich des Kissens 3 erhöht. Die Polsterung 12 kann entweder weggelassen werden oder direkt in einem mehrlagigen Überzug 4 integriert sein.

Die Fig. 8-11 zeigen ein zweites Ausführungsbeispiel eines pneumatischen Kissens 3 für pneumatisch verstellbare Seitenwangen.

Das Kissen 3 kann auf dieselbe Weise hergestellt werden wie das des vorangegangenen Ausführungsbeispiels. Mittels Stempel werden zwei Membranen 8 verschweisst und bilden ein Kissen 3 mit zwei Kammern 6, welche durch eine unterbrochene Verbindung 9 der oberen und unteren Membran 8 geschaffen werden. Anstelle einer dritten Kammer 6 weist das Kissen 3 ein Verbindungsteil 13 auf, gefertigt aus der Membran 8. Das Verbindungsteil 13 kann ein- oder zweilagig, an einem Stück oder zweiteilig ausgeführt sein. Der Druckausgleich zwischen den beiden Kammern 6 muss wiederum auch im gefalteten Zustand gewährleistet sein, beispielsweise durch Einbringen eines Distanzgewirks 11 im Bereich des oder der Unterbrüche in der Verbindung 9.

Die Fig. 9 zeigt das zweite Ausführungsbeispiel eines Kissens 3 in gefaltetem Zustand. Das Verbindungsteil 13 ist beispielsweise durch Schweissen an der äusseren Kammer 6 befestigt. So entsteht ein längliches Kissen 3 mit einem dreiekkigen Querschnitt, wobei zwei Seiten des Dreiecks durch die Kammern 6 und eine Seite durch das Verbindungsteil 13 gebildet werden.

Ein Vorteil dieses Ausführungsbeispiels besteht darin, dass auf eine Hülle 7 verzichtet werden kann. Das Kissen kann infolge seines durch das Verbindungsteil 13 geschlossenen dreieckigen Querschnitt keine gestreckte Form, wie in Fig. 8 dargestellt, mehr einnehmen.

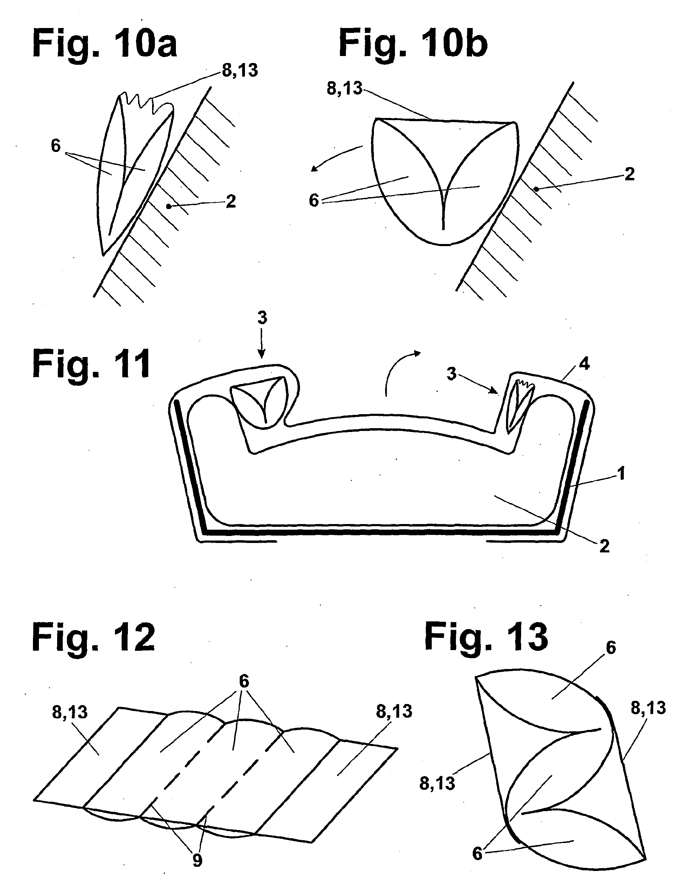

Die Fig. 10 zeigt die Wirkweise des zweiten Ausführungsbeispiels eines Kissens 3. Eine Kammer 6 des Kissens 3 ist beispielsweise auf einem Formteil 2 befestigt. Fig. 10a zeigt das Kissen mit wenig Druckluft beaufschlagt. Das Verbindungsteil 13 ist schlaff und nicht gestreckt.

Wird der Druck im Kissen 3 erhöht, stossen sich die beiden Kammern 6 mit zunehmend rundlicherem Querschnitt voneinander ab. Fig. 10b zeigt das zweite Ausführungsbeispiel eines Kissens 3 maximal mit Druck beaufschlagt. Das Verbindungsteil 13 ist straff gespannt. Die Bewegungsrichtung, welche die nicht am Formteil 2 befestigte Kammer 6 ausführt, ist mit einem Pfeil schematisch angedeutet.

In Fig. 11 sind zwei Kissen 3 auf den Seitenwangen einer Lehne im Schnitt dargestellt. Das in der Fig. 11 linke Kissen 3 ist mit Druck beaufschlagt, und das in der Fig. 11 rechte Kissen 3 ist vom Druck entlastet. Diese Situation tritt beispielsweise bei dynamisch gesteuerten Seitenwangen beim Durchfahren einer Rechtskurve ein. Das jeweils kurvenäussere Kissen 3 wird, gesteuert von einer Steuereinheit mit einem Beschleunigungssensor, beschleunigungsabhängig mit Druck beaufschlagt und wirkt der Zentrifugalkraft entgegen. Der Benutzer sinkt weniger in der Seitenwange ein, weil er durch das zunehmende Volumen des Kissens 3 härter gestützt wird. Die Fig. 12 zeigt ein drittes Ausführungsbeispiel eines Kissens 3, welches eine Kombination aus den ersten beiden Ausführungsbeispielen darstellt. Das Kissen 3 besteht aus drei Kammern 6 mit zwei Verbindungsteilen 13 an den beiden äusseren Kammern 6. Fig. 13 zeigt das fertige Kissen 3 im Querschnitt. Die Kammern 9 sind z-förmig zusammengelegt und die Verbindungsteile 13 sind so am Kissen 3 befestigt, dass zwei aneinandergereihte Kissen 3 des zweiten Ausführungsbeispiels entstehen, wobei die innere Kammer 6 im Querschnitt gleichzeitig als Seite für beide Dreiecke dient. Funktional entspricht dieses dritte Ausführungsbeispiel dem ersten und hat gleichzeitig die Vorteile des zweiten, nämlich ohne Hülle 7 auszukommen.

Dem Fachmann sind verschiedene Möglichkeiten bekannt, wie der Druck in den Kissen 3 verändert und geregelt werden kann. Auf die dazu notwendigen Mittel zur Erzeugung und Verteilung der Druckluft, die Mittel zur Steuerung und Regelung und die Mittel zur Bedienung der Vorrichtung wird deshalb nicht näher eingegangen.

## Patentansprüche

1. Fahrzeugsitz mit einem Rahmen (1), mindestens einem Formteil (2), einem Überzug (4) und mit pneumatisch verstellbaren Seitenwangen, bestehend aus mindestens einem mit Druck beaufschlagbaren Kissen (3), mit Mitteln zur Erzeugung von komprimierter Luft, Mitteln zur Verteilung von komprimierter Luft, und mit Mitteln zur Bedienung, wobei
das mindestens eine Kissen (3) mindestens zwei längsseitig miteinander mittels Verbindungen (9) verbundene Kammern (6) aufweist und
- entweder auf der einem Benutzer zugewandten Seite des zu Seitenwangen geformten Formteils (2),
- und/oder zwischen dem Rahmen (1) und dem zu Seitenwangen geformten Formteil (2)
angebracht ist,
**dadurch gekennzeichnet, dass**
das mindestens eine Kissen (3) aus zwei längsseitig miteinander verbundenen Kammern (6) und einem Verbindungsteil (13) besteht und einen im Wesentlichen dreieckigen Querschnitt aufweist, wobei zwei Schenkel des Querschnitts durch die Kammern (6) und ein Schenkel durch das Verbindungsteil (13) gebildet wird,
oder aus drei längsseitig miteinander verbundenen Kammern (6) und zwei Verbindungsteilen (13) besteht und einen im Wesentlichen z-förmigen Querschnitt aufweist, wobei die z-Form durch die Kammern (6) gebildet wird und die Verbindungsteile (13) die z-Form zu einem Viereck schliessen, bei welchem die mittlere Kammer (6) als Diagonale verläuft, oder
das mindestens eine Kissen (3) aus drei längsseitig miteinander verbundenen Kammern (6) besteht und im mit Druck beaufschlagten Zustand einen im Wesentlichen z-förmigen Querschnitt aufweist, wobei das Kissen (3) bei Druckbeaufschlagung mittels einer Hülle (7) in die z-Form gezwungen wird.

2. Fahrzeugsitz mit pneumatisch verstellbaren Seitenwangen nach Anspruch 1, **dadurch gekennzeichnet, dass**
Unterbrüche in den Verbindungen (9) vorhanden sind, welche einen Druckausgleich zwischen den Kammern (9) ermöglichen und
im Bereich dieser Unterbrüche Mittel (11) vorhanden sind, welche dazu geeignet sind, den Luftaustausch zwischen den Kammern (6) im geknickten Zustand zu gewährleisten.

3. Fahrzeugsitz mit pneumatisch verstellbaren Seitenwangen nach Anspruch 1, **dadurch gekennzeichnet, dass**
die Abgrenzungen der Kammern (6) und Verbindungen (9) des mindestens einen Kissens (3) durch Schweissnähte gebildet werden, wobei zwei aufeinandergelegte Membranen (8) mittels eines Stempels in einem Schweissvorgang verschweisst werden.

4. Fahrzeugsitz mit pneumatisch verstellbaren Seitenwangen nach nach Anspruch 1 oder 2, **dadurch gekennzeichnet, dass** die Membranen (8) aus PU-Folie bestehen.

5. Fahrzeugsitz mit pneumatisch verstellbaren Seitenwangen nach einem der Ansprüche 1 bis 3, **dadurch gekennzeichnet, dass**
Mittel für Steuerung und Regelung des Luftdruckes und Mittel zur Messung der seitlichen Beschleunigung vorhanden sind, sowie Mittel, um mindestens zwei Kissen (3), je eines auf beiden Seiten des Sitzes, unabhängig voneinander in Abhängigkeit von der seitlichen Beschleunigung innert Sekundenbruchteilen mit Druck beaufschlagen zu können.

6. Fahrzeugsitz mit pneumatisch verstellbaren Seitenwangen nach Patentanspruch 5, **dadurch gekennzeichnet, dass**
pro Seitenwange je mindestens ein statisches Kissen (3) und je mindestens ein dynamisches Kissen (3) vorhanden sind, wobei die dynamischen Kissen (3) in Abhängigkeit von der seitlichen Beschleunigung mit Druck beaufschlagt werden können.

## Claims

1. Vehicle seat with a frame (1), at least one shaped part (2), a covering (4) and with pneumatically adjustable side edges, consisting of at least one cushion (3) which is able to be acted upon by pressure, with means for the production of compressed air, means for the distribution of compressed air, and with means for operating,
wherein
the at least one cushion (3) has at least two chambers (6), connected with each other on the longitudinal side by means of connections (9) and is arranged
- either on the side of the shaped part (2), shaped to form side edges, facing a user,
- and/or between the frame (1) and the shaped part (2) shaped to form side edges,
**characterized in that**
the at least one cushion (3) consists of two chambers (6) connected with each other on the longitudinal side and of a connecting part (13), and has a substantially triangular cross-section, wherein two arms of the cross-section are formed by the chambers (6) and one arm is formed by the connecting part (13),
or of three chambers (6) connected with each other on the longitudinal side and of two connecting parts (13), and has a substantially z-shaped cross-section, wherein the z shape is formed by the chambers (6) and the connecting parts (13) close the z shape to a quadrilateral, in which the middle chamber (6) runs as a diagonal, or
the at least one cushion (3) consists of three chambers (6) connected with each other on the longitudinal side, and in the state when acted upon by pressure has a substantially z-shaped cross-section, wherein the cushion (3), on application by pressure, is forced into the z shape by means of a covering (7).

2. Vehicle seat with pneumatically adjustable side edges according to Claim 1, **characterized in that** interruptions are present in the connections (9), which make possible a pressure equalization between the chambers (9) and
in the region of these interruptions means (11) are present, which are able to ensure the air exchange between the chambers (6) in the buckled state.

3. Vehicle seat with pneumatically adjustable side edges according to Claim 1, **characterized in that** the boundaries of the chambers (6) and connections (9) of the at least one cushion (3) are formed by weld seams, wherein two membranes (8) which are placed one on another are welded by means of a die in a welding process.

4. Vehicle seat with pneumatically adjustable side edges according to Claim 1 or 2, **characterized in that** the membranes (8) consist of PU film.

5. Vehicle seat with pneumatically adjustable side edges according to one of Claims 1 to 3, **characterized in that**
means for controlling and regulating the air pressure and means for measuring the lateral acceleration are present, and also means in order to be able to act with pressure on at least two cushions (3), one each on the two sides of the seat, independently of each other as a function of the lateral acceleration within fractions of a second.

6. Vehicle seat with pneumatically adjustable side edges according to Claim 5, **characterized in that** for each side edge in each case at least one static cushion (3) and in each case at least one dynamic cushion (3) are present, wherein the dynamic cushions (3) can be acted upon by pressure as a function of the lateral acceleration.

## Revendications

1. Siège de véhicule comprenant un cadre (1), au moins une partie moulée (2), un revêtement (4) et des joues latérales réglables de façon pneumatique, comprenant au moins un coussin (3) pouvant être sollicité avec de la pression, des moyens pour générer de l'air comprimé, des moyens pour répartir de l'air comprimé, et des moyens pour la commande,
le au moins un coussin (3) présentant au moins deux chambres (6) reliées entre elles dans la longueur au moyen de liaisons (9) et
- étant placé soit sur le côté tourné vers un utilisateur de la partie moulée (2) formée en joues latérales,
- et/ou entre le cadre (1) et la partie moulée (2) formée en joues latérales,
**caractérisé en ce que**
le au moins un coussin (3) est constitué de deux chambres (6) reliées entre elles côté longueur et une partie de liaison (13) et présente une section sensiblement triangulaire, deux branches de la section étant formées par les chambres (6) et une branche par la partie de liaison (13),
ou est constitué de trois chambres (6) reliées entre elles dans la longueur et deux parties de liaison (13) et présente une section sensiblement en z, la forme de z étant formée par les chambres (6) et les parties de liaison (13) fermant la forme de z en un carré, sur lequel la chambre (6) centrale est agencée sous forme de diagonale, ou
le au moins un coussin (3) est constitué de trois chambres (6) reliées entre elles côté longueur et présente une section sensiblement en z dans l'état sollicité avec de la pression, le coussin (3) étant forcé en cas d'alimentation en pression au moyen d'une enveloppe (7) dans la forme en z.

2. Siège de véhicule doté de joues latérales réglables de façon pneumatique selon la revendication 1, **caractérisé en ce que** des interruptions sont présentes dans les liaisons (9), lesquelles permettent un équilibre de pression entre les chambres (9) et
des moyens (11) sont présents dans la zone de ces interruptions, lesquels sont appropriés pour garantir l'échange d'air entre les chambres (6) dans l'état plié.

3. Siège de véhicule doté de joues latérales réglables de façon pneumatique selon la revendication 1, **caractérisé en ce que**
les délimitations des chambres (6) et liaisons (9) du au moins un coussin (3) sont formées par des cordons de soudure, deux membranes (8) posées l'une sur l'autre étant soudées au moyen d'une matrice dans une opération de soudure.

4. Siège de véhicule doté de joues latérales réglables de façon pneumatique selon la revendication 1 ou 2, **caractérisé en ce que**
les membranes (8) sont à base d'un film de polyuréthane.

5. Siège de véhicule doté de joues latérales réglables de façon pneumatique selon l'une quelconque des revendications 1 à 3, **caractérisé en ce que**
des moyens pour la commande et le réglage de la pression d'air et des moyens pour la mesure de l'accélération latérale sont présents, ainsi que des moyens pour pouvoir alimenter en pression au moins deux coussins (3), chacun sur les deux côtés du siège, indépendamment l'un de l'autre en fonction de l'accélération latérale en l'espace de quelques fractions de seconde.

6. Siège de véhicule doté de joues latérales réglables de façon pneumatique selon la revendication 5, **caractérisé en ce que**
dans chaque cas au moins un coussin (3) statique et au moins un coussin (3) dynamique par joue latérale sont présents, les coussins (3) dynamiques pouvant être alimentés en pression en fonction de l'accélération latérale.
